# EUROPEAN PATENT APPLICATION

(11) **EP 4 012 622 A1**
(43) Date of publication of application: **15.06.2022**
(21) Application number: 21194528.2
(22) Date of filing: 02.09.2021
(51) Int. Cl.: G06N 3/067, G06N 3/08, G06E 3/00

(54) **APPARATUS, SYSTEM, AND METHOD FOR PARTITIONED NEURAL NETWORK USING PROGRAMMABLE HETEROGENEOUS HETEROSTRUCTURES**

(30) Priority: 08.12.2020 US 202017115645
(71) Applicant: INTEL Corporation, Santa Clara, CA 95054 (US)
(72) Inventor: Hogaboam, Justin W., Aloha, 97007 (US); Srinivasa, Narayan, San Jose, 95134 (US)
(74) Representative: Goddar, Heinz J.

(57) **Abstract**

Embodiments are directed toward an artificial neural network (ANN) partitioned into a substantially invariant portion and a variant portion. In embodiments, the substantially invariant portion includes a plurality of programmable heterogeneous heterostructures disposed in an optical substrate, programmed at least in part by their arrangement in the optical substrate to combine and scatter input optical data to provide output optical data for the substantially invariant portion of the ANN. A photonic pathway includes the substantially invariant portion and is coupleable to provide output optical data to a variant portion of the ANN and the variant portion is to perform training of the ANN based at least in part on the provided output optical data. Other embodiments may be described and/or claimed.

## Description

### Field

Embodiments of the present disclosure generally relate to the field of artificial neural networks (ANNs), and more particularly, to techniques and configurations for providing partitioned artificial neural networks using optical substrates.

### Background

Artificial neural networks (ANNs) are computing systems inspired by the architecture of the brain. ANNs are used in a wide variety of machine learning (ML) applications such as, e.g., pattern recognition in images, voice recognition, language translation, and interpretation. The training of ANNs in order to establish appropriate training weights and biases for such application areas, however, can be costly in terms of computational power, energy, and time. To help improve this situation, there have been efforts to reuse portions of ANN's trained on generic data (e.g., ImageNet images, a visual database which include thousands of images). In a transfer mode of learning, for example, once the ANN is trained for a task, the bulk of the ANN layers (which serve as feature detectors) are reused without the need for retraining their weights.

### Brief Description of the Drawings

Embodiments will be readily understood in conjunction with the accompanying drawings. To facilitate this description, like reference numerals designate like structural elements. Embodiments are illustrated by way of example and not by way of limitation in the figures of the accompanying drawings.
**FIG. 1** illustrates a substantially invariant portion of an artificial neural network (ANN) and corresponding intensity distributions, in accordance with embodiments of the present disclosure.
**FIG. 2** is a block diagram illustrating an implementation of an ANN including a variant and substantially invariant portion, in accordance with embodiments of the present disclosure.
**FIG. 3** is a simplified diagram illustrating a portion of an optical fiber substrate, in accordance with embodiments of the present disclosure.
**FIG. 4** is a flow chart illustrating methods associated with implementing a portion of an ANN, in accordance with embodiments of the present disclosure.
**FIG. 5** illustrates an example computing device that may include a substantially invariant and/or variant portion of an ANN, in accordance with various embodiments.

### Detailed Description

Embodiments of the present disclosure describe techniques and configurations for apparatuses, systems, and methods for a partitioned artificial neural network (ANN). In embodiments, the ANN is partitioned into a substantially invariant portion and a variant portion. In embodiments, the substantially invariant portion includes a plurality of programmable heterogeneous heterostructures disposed in an optical substrate that are programmed at least in part by their arrangement in the optical substrate to combine and scatter input light including input optical data to provide output optical data. In embodiments, a photonic pathway includes the substantially invariant portion and is coupleable to provide the output optical data to a variant portion (e.g., trainable) of the ANN. In some embodiments, the invariant portion provides inference and the variant portion performs training (and/or inference) of the ANN based at least in part on the provided optical data output. In some embodiments, the photonic pathway is a photonic inference chip or an optical fiber that couples to a CPU or optical accelerator that may provide the variant portion of the ANN. In embodiments, the photonic pathway provides pathways between more than one variant portion of the ANN and/or serves as a photonic interconnect.

In the following description, various aspects of the illustrative implementations will be described using terms commonly employed by those skilled in the art to convey the substance of their work to others skilled in the art. However, it will be apparent to those skilled in the art that embodiments of the present disclosure may be practiced with only some of the described aspects. For purposes of explanation, specific numbers, materials, and configurations are set forth in order to provide a thorough understanding of the illustrative implementations. It will be apparent to one skilled in the art that embodiments of the present disclosure may be practiced without the specific details. In other instances, well-known features are omitted or simplified in order not to obscure the illustrative implementations.

In the following detailed description, reference is made to the accompanying drawings that form a part hereof, wherein like numerals designate like parts throughout, and in which is shown by way of illustration embodiments in which the subject matter of the present disclosure may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous. The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or more elements are in direct contact.

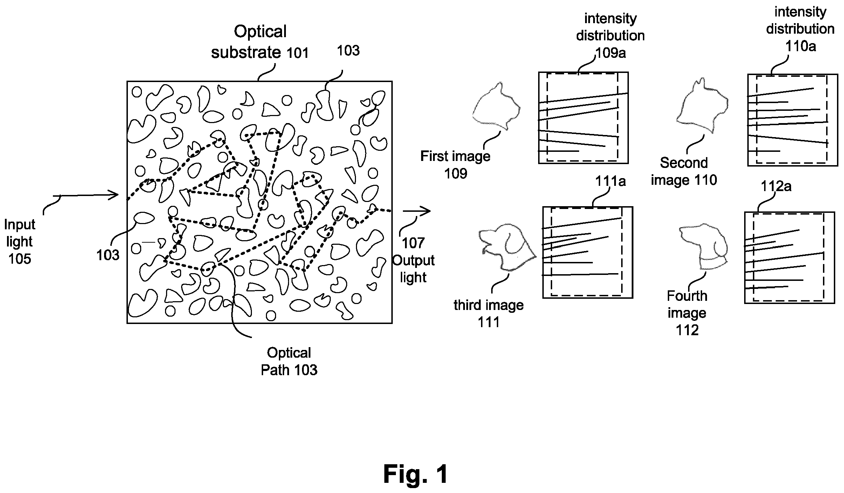

**FIG. 1** illustrates a substantially invariant portion of an ANN and corresponding energy intensity distributions associated with the substantially invariant portion, in accordance with embodiments of the present disclosure. In embodiments, the substantially invariant portion (hereinafter "invariant portion") includes an optical substrate 101. As shown, a plurality of programmable heterogeneous heterostructures 103 are disposed in optical substrate 101. In embodiments, heterogeneous heterostructures 103 are programmed at least in part by their arrangement (and shape) in optical substrate 101 to combine and scatter input light, on which input optical data is encoded, to provide output optical data for the invariant portion of a neural network (note that only two of the programmable heterogeneous heterostructures 103 have been labeled in order not to obscure the figure). For example, input light 105 follows an example optical path 103 through optical substrate 101. In embodiments, an intensity of output light 107 may be measured and an energy intensity (hereinafter "intensity") distribution associated with the input optical data may form a mapping or pattern.

For example, input optical data associated with a first image 109, second image 110, third image 111, and fourth image 112 are associated with respective intensity distributions 109a, 110a, 111a, and 112a. Thus, for example, input light associated with a first image 109 results in output light that has an intensity distribution of intensity distribution 109a. In a machine learning (ML) image recognition model, for example, the image can be identified as a particular animal, e.g., a cat, dog, or other animal. As shown, intensity distribution 109a has a light intensity pattern that is identified with a cat. If input light associated with second image 110 results in an output light having similar intensity distribution 110a (yet varying from intensity distribution 109a), the image may also be identified as a cat. Input light associated with a third image 111 results in output light that has an intensity distribution 111a, the image is identified as a dog. If input light associated with fourth image 112 results in an output light having intensity distribution 112a, the image is also identified as a dog. Note that intensity distributions 109a and 110a are similar, but not the same (just as intensity distributions 111a and 112a are similar, but not the same). In embodiments, intensity distributions may result in an inference dependent upon a predominance of light matching a particular intensity distribution or pattern.

In embodiments, an invariant portion of the ANN including optical substrate 101 is used as an inference portion of the ANN or as a substantially invariant subset of a training portion of the ANN. Note that plurality of programmable heterogeneous heterostructures 103 are embedded or etched in optical substrate 101, arranged in a manner to apply fixed weights in computations applied to input light 105 of the invariant portion. In embodiments, optical substrate 101 comprises a material such as glass (SiO2) or other suitable optical medium that includes programmable heterogeneous heterostructures 103. Programmable heterogeneous heterostructures 103 include any suitable materials (and/or air) having a different refractive index from optical substrate 101. Note that plurality of programmable heterogeneous heterostructures 103 include both linear and nonlinear structures, respectively arranged and shaped to provide both linear and nonlinear matrix multiplication computations. In embodiments, programmable heterogeneous heterostructures 103 are further programmable based at least in part on particular parameters of input light.

Plurality of programmable heterogeneous heterostructures 103 are fixed in optical substrate 101 and arranged in a manner to apply fixed weights in computations applied to input light 105. In embodiments, the invariant portion is used as an inference portion of an ANN with unchanging weights. Or, as noted above, in embodiments, an invariant subset of a training portion of the ANN. In embodiments, the invariant portion is included among a plurality of invariant portions of the ANN. In embodiments, a photonic inference chip including optical substrate 101 performs a first invariant portion of an ANN. In embodiments the photonic inference chip is combinable with a second inference chip to perform a second invariant portion of the plurality of invariant portions of the ANN. In embodiments, multiple photonic inference chips can be combined to perform multiple invariant portions (e.g., inference portions) of the ANN. In embodiments, the invariant portion performs feature extraction combinable with another photonic inference chip to perform additional future extraction or classification. In some embodiments, the substantially invariant portion performs lower-level feature extraction or image recognition tasks and the variant portion includes higher level feature extraction tasks or classifications. Although the example given in FIG. 1, includes one of image recognition, photonic inference chips can be used in any ANN application, e.g., pattern recognition in images, voice recognition, language translation, and interpretation, to name only a few.

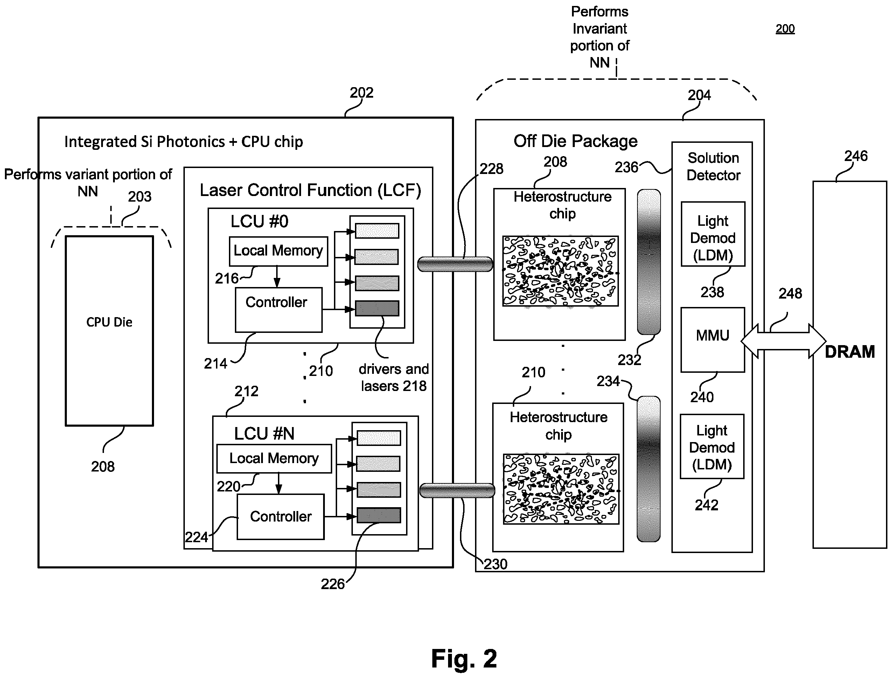

Referring now to FIG. 2, which is a block diagram illustrating an implementation of a neural network (ANN) including a variant and invariant portion, in accordance with embodiments of the present disclosure. FIG. 2 illustrates an integrated silicon photonics and central processing unit (CPU) unit 202 and an invariant unit 204. As shown, integrated silicon photonics and central processing unit (CPU) unit 202 includes, for example, laser control function (LCF) units 210 and 212 and CPU die 208. LCF units 210 and 212 each include respective local memories 216 and 220, controllers 214 and 224, and drivers and lasers 218 and 226. In the embodiment, optical pathways or waveguides 228 and 230 are coupled between integrated silicon photonics and CPU unit 202 and invariant unit 204. As shown in the example, invariant unit 204 further includes a solution detector 236, light demodulators (LDM) 238 and 242, and memory management unit (MMU) 240. In embodiments dynamic random-access memory (DRAM) 246 is memory of CPU die 208 (DRAM 246 is shown to a right of invariant unit 204 to illustrate a flow of output data to DRAM 246 from integrated silicon photonics and CPU chip 202).

In embodiments, controllers 214 and 224 respectively control drivers and lasers 218 and 226 to control generation of an array of input light (e.g. input light 105 of FIG. 1) that will include encoded input data, e.g., optical input data. In embodiments, optical modulators (not shown) are also included with drivers and lasers 218 and 226. In embodiments, the array of input light is provided to optical pathways or waveguides 228 and 230 and input into respective heterostructure chips 208 and 210. In embodiments, heterostructure chips 208 and 210 include an optical substrate as described in connection with FIG. 1, having a plurality of programmable heterogeneous heterostructures programmed at least in part by their shape and/or arrangement to combine and scatter input light to provide output optical data. In embodiments, output light is received by solution detector 236. In embodiments, optical demodulator or light demodulator (LDM), assists in extracting data from the output light and the output data is provided to a memory management unit (MMU) 240. In embodiments, solution detector 236 assists extracting data through a ANN pattern recognition process, where a resulting intensity distribution is matched or correlated with a feature, portion of a feature, or higher level classification of data (e.g., as discussed in connection with FIG. 1). In embodiments MMU 240 provides the resulting output data at 248 to DRAM 246.

Accordingly, output data is provided to CPU die 208 for processing a variant portion of the ANN. In embodiments, CPU die 208 is located on integrated silicon photonics and central processing unit (CPU) unit 202 which includes a separate integrated photonics/CPU chip 202. In embodiments, the variant portion includes a training portion of the ANN where weights may be adjusted. Note that optical pathway or waveguide 228 is shown as transmitting different wavelengths (or colors) of light, illustrated as a gradient of shading which corresponds to gradients 232 and 234 which represent a light output of respective heterostructure chips 208 and 210.

Note that in some embodiments, the heterostructure chips 208 and 210 are coupled with multiple additional heterostructure chips 208 and 210 to perform inference via, e.g., back propagation. Thus, in embodiments, input light propagate through a deeper layer of inference chips, including fully programmable ANN chips, in order to form a deep neural network (DNN). Thus, embodiments may provide fixed feature extraction along with a level of learning capability that allows a DNN to solve models faster and with decreased energy costs. In various embodiments, CPU die 208 includes a high performance CPU to receive the output data. In embodiments, DRAM 246 provides the output data to a classical tensor-based ANN solver on a graphics processing unit (GPU), tensor processing unit (TPU) or cloud server to compute hidden sublayer weights between the invariant portions and variant portions of the ANN and all the weights within the variant portion of the ANN

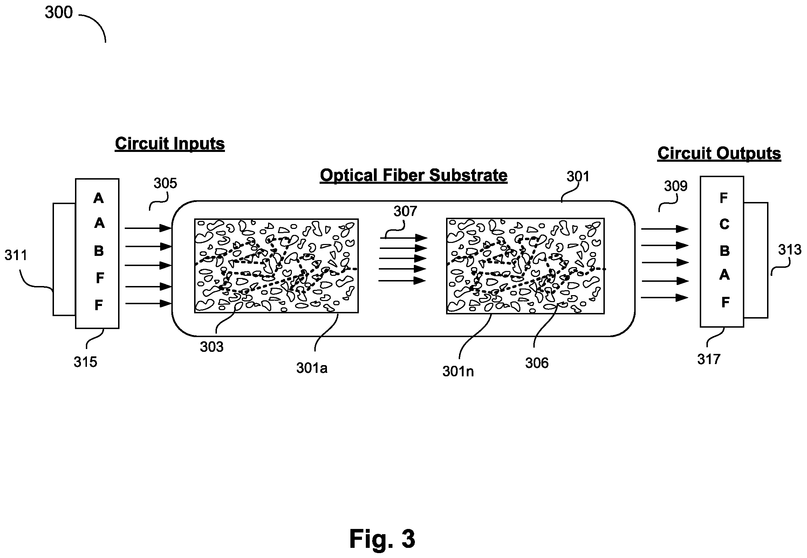

**FIG. 3** is a simplified diagram illustrating an optical fiber substrate, in accordance with embodiments of the present disclosure. As shown, an optical fiber substrate 301 includes a first optical substrate 301a and a subsequent (or nth) optical substrate 301n. In embodiments, substrate 301a and optical substrate 301n are similar or the same as optical substrate 101 of FIG. 1. In embodiments, a plurality of example programmable heterogeneous heterostructures 303 and 306 are disposed in optical substrate 301a and optical substrate 301n. The heterogeneous heterostructures 303 and 306 are programmed at least in part by their arrangement (and shape) in optical substrate 101 to combine and scatter input light, on which input optical data is encoded, to provide output optical data.

For example, a hardware circuit 311 encodes example inputs values 315 (e.g., A, A, B, F, F) and transmits the encoded data as input light 305. Optical substrate 301a receives input light 305, scattering, combining, and transforming (linearly and non-linearly) input light 305, generating light output 307. In turn, optical substrate 301n receives light output 307, scattering, combining, and transforming (linearly and non-linearly) light output 307 and generating light output 309. In the example, circuit 313 performs optical-electrical conversion and decodes light output (and performs pattern recognition extraction) to result in output values 317 (e.g., F, C, B, A, or F). Thus, in the example, categories of features detectable by a combination of optical substrates 301a to 301n include F, C, B, or A. Input values A, A, B, F, F are fed into an invariant portion of a ANN and light is output at 309. In embodiments, only one of the categories of features represented by the input values are detected at circuit 313 (e.g., F, C, B, A, or F).

In some embodiments, optical fiber substrate 301 performs an invariant portion of an ANN. In other embodiments, optical fiber substrate 301, with or without performing an invariant portion of an ANN, securely transmits data. In embodiments, an optical fiber including the optical substrate is used to encode/decode communications and/or perform cryptographic functions. In embodiments, such encoding/decoding and cryptography prevents snooping of chip to chip communications in a system fabric, while maintaining light speed data rates. For example, at a transmitter end, encoded data is transmitted chip to chip through light striking the optical fiber substrate 301 (which represents a) ANN glass inference model. At the receiver end, output light is fed back into an inverted ANN model. The data is then extracted through a normal ANN pattern recognition process (e.g., as associated with FIG. 1) and stored in receiving chip buffers. In embodiments, data can flow in a duplex manner along the optical fiber.

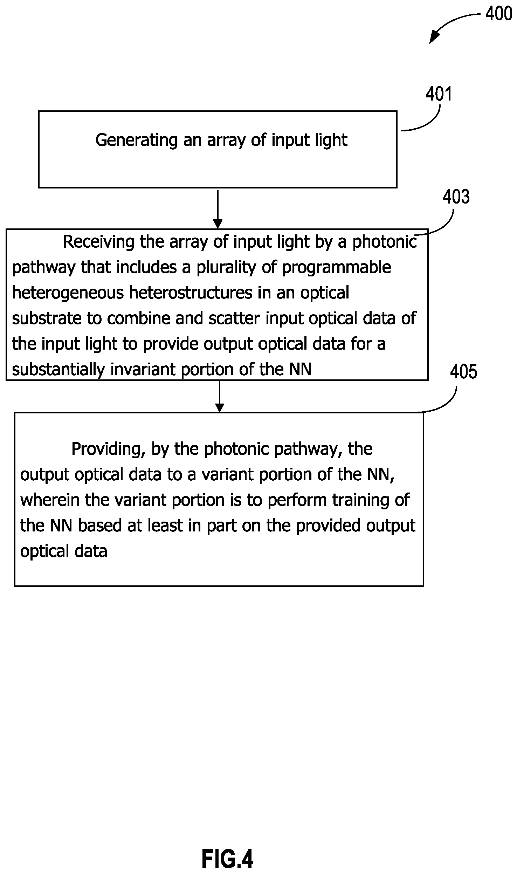

**FIG. 4** is an example flow diagram 400 of a method associated with FIGS. 1-3, in accordance with various embodiments. For the embodiment, at a block 401, the method 400 includes generating by a plurality of light sources, an array of input light. In embodiments, the light sources include, for example, lasers such as of, e.g. drivers and lasers 218 of FIG. 2. Next, at a block 403, method 400 includes receiving by a photonic pathway, the array of input light. In embodiments, the photonic pathway includes a plurality of programmable heterogeneous heterostructures in an optical substrate to combine and scatter input optical data of the input light to provide output optical data for a substantially invariant portion of the ANN. In embodiments, the substantially invariant portion of the ANN is used as an inference portion of the ANN or as a substantially invariant subset of a training portion of the ANN. Further note that, in embodiments, the ANN is partitioned into a plurality of substantially invariant portions and a plurality of variant portions. In embodiments, the substantially invariant portion and the variant portion are included in the plurality of substantially invariant portions and the plurality of variant portions. Finally, at a next block 405, method 400 includes providing, by the photonic pathway, the output optical data to a variant portion of the ANN. In embodiments, the variant portion is to perform training of the ANN based at least in part on the provided output optical data.

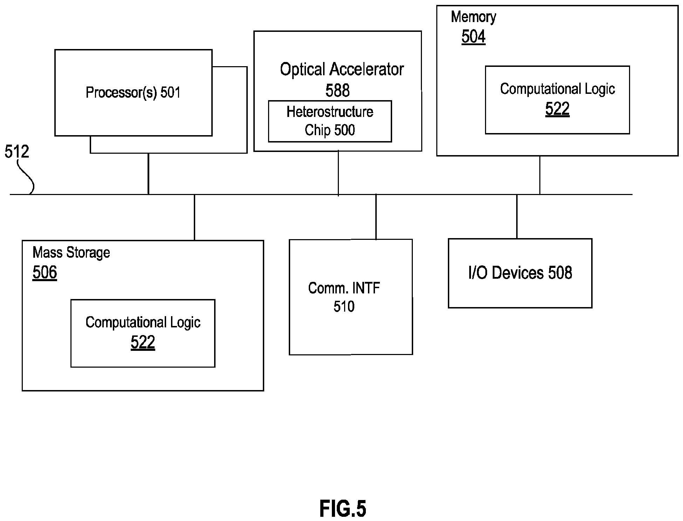

**FIG. 5** illustrates an example computing device 500 suitable for use with a partitioned neural network having an invariant portion and a variant portion, such as described in connection with FIGS. 1-4. In various embodiments, example computing device 500 is used with an invariant portion, e.g., a heterostructure chip 525 (similar to heterostructure chip 208, of FIG. 2) in accordance with various embodiments as described herein. In some embodiments, heterostructure chip 525 is included in an optical accelerator 588 and may be operationally coupled to components similar to as described in connection with FIG. 2. In some embodiments, optical accelerator 588 is also used with an optical fiber substrate, such as optical fiber substrate 301 of FIG. 3.

As shown, computing device 500 may include a one or more processors or processor cores and memory 504. In embodiments, memory 504 may be system memory. For the purpose of this application, including the claims, the terms "processor" and "processor cores" may be considered synonymous, unless the context clearly requires otherwise. The processor 501 may include any type of processors, such as a central processing unit CPU, a microprocessor, and the like. The processor 501 may be implemented as an integrated circuit having multi-cores, e.g., a multi-core microprocessor. The computing device 500 may include mass storage devices 506 (such as diskette, hard drive, volatile memory (e.g., dynamic random-access memory (DRAM), compact disc read-only memory (CD-ROM), digital versatile disk (DVD), and so forth). In general, memory 504 and/or mass storage devices 506 may be temporal and/or persistent storage of any type, including, but not limited to, volatile and non-volatile memory, optical, magnetic, and/or solid state mass storage, and so forth. Volatile memory may include, but is not limited to, static and/or dynamic random-access memory. Non-volatile memory may include, but is not limited to, electrically erasable programmable read-only memory, phase change memory, resistive memory, and so forth. In embodiments, processor 501 is a high performance or server CPU. In various embodiments, processor 501 is included on a CPU die, e.g., 208 of FIG. 2, and memory 504 includes, e.g., DRAM 246 of FIG. 2.

The computing device 500 may further include input/output (I/O) devices 508 (such as a display (e.g., a touchscreen display), keyboard, cursor control, remote control, gaming controller, image capture device, and so forth) and communication interfaces 510 (such as network interface cards, modems, infrared receivers, radio receivers (e.g., Bluetooth), and so forth). The communication interfaces 510 may include communication chips that may be configured to operate the device 500 in accordance with a Global System for Mobile Communication (GSM), General Packet Radio Service (GPRS), Universal Mobile Telecommunications System (UMTS), High Speed Packet Access (HSPA), Evolved HSPA (E-HSPA), or Long-Term Evolution (LTE) network. The communication chips may also be configured to operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chips may be configured to operate in accordance with Code Division Multiple Access (CDMA), Time Division Multiple Access (TDMA), Digital Enhanced Cordless Telecommunications (DECT), Evolution-Data Optimized (EV-DO), derivatives thereof, as well as any other wireless protocols that are designated as 3G, 4G, 5G, and beyond. The communication interfaces 510 may operate in accordance with other wireless protocols in other embodiments.

The above-described computing device 500 elements may be coupled to each other via system bus 512, which may represent one or more buses. In the case of multiple buses, they may be bridged by one or more bus bridges (not shown). Each of these elements may perform its conventional functions known in the art. In particular, memory 504 and mass storage devices 506 may be employed to store a working copy and a permanent copy of the programming instructions for the operation of optical accelerator and/or heterostructure chip 500. The various elements may be implemented by assembler instructions supported by processor(s) 503 or high-level languages that may be compiled into such instructions.

The permanent copy of the programming instructions may be placed into mass storage devices 506 in the factory, or in the field, through, for example, a distribution medium (not shown), such as a compact disc (CD), or through communication interface 510 (from a distribution server (not shown)). That is, one or more distribution media having an implementation of the agent program may be employed to distribute the agent and to program various computing devices.

The number, capability, and/or capacity of the elements 508, 510, 512 may vary, depending on whether computing device 503 is used as a stationary computing device, such as a server computer in a data center, or a mobile computing device, such as a tablet computing device, laptop computer, game console, or smartphone. Their constitutions are otherwise known, and accordingly will not be further described.

For one embodiment, at least one of processors 503 may be packaged together with computational logic 522 configured to practice aspects of optical signal transmission and receipt described herein to form a System in Package (SiP) or a System on Chip (SoC).

In various implementations, the computing device 503 may comprise one or more components of a data center, a laptop, a netbook, a notebook, an ultrabook, a smartphone, a tablet, a personal digital assistant (PDA), an ultra mobile PC, a mobile phone, or a digital camera. In further implementations, the computing device 501 may be any other electronic device that processes data.

According to various embodiments, the present disclosure describes a number of examples.
Example 1 includes an apparatus, comprising a substantially invariant portion of an artificial neural network (ANN), wherein the substantially invariant portion includes a plurality of programmable heterogeneous heterostructures disposed in an optical substrate, wherein the programmable heterogeneous heterostructures are programmed at least in part by their arrangement in the optical substrate to combine and scatter input optical data to provide output optical data for the substantially invariant portion of the ANN; and a photonic pathway to include the substantially invariant portion, wherein the photonic pathway is coupleable to provide the output optical data to a variant portion of the ANN, wherein the variant portion is to perform training of the ANN based at least in part on the provided output optical data.
Example 2 includes the apparatus of Example 1, wherein the substantially invariant portion of the ANN model is used as an inference portion of the ANN or as a substantially invariant subset of a training portion of the ANN
Example 3 includes the apparatus of Example 1, wherein the ANN is partitioned into the substantially invariant portion and the variant portion.
Example 4 includes the apparatus of Example 3 wherein the substantially invariant portion and the variant portion are included in a plurality of substantially invariant portions and a plurality of variant portions of the ANN
Example 5 includes the apparatus of Example 1, wherein the plurality of programmable heterogeneous heterostructures are programmed at least in part by their shape and arrangement in the optical substrate to combine and scatter input light to perform computations for the substantially invariant portion of the ANN
Example 6 includes the apparatus of any one of Examples 1-5, wherein the plurality of programmable heterogeneous heterostructures are embedded or etched in the optical substrate to apply fixed weights to a light input to the optical substrate.
Example 7 includes the apparatus of Example 1, wherein the photonic pathway comprises a photonic inference chip to perform a first invariant portion of the ANN combinable with a second photonic inference chip to perform a second invariant portion of the ANN
Example 8 includes the apparatus of Example 1, wherein the substantially invariant portion is to perform feature extraction for the ANN combinable with another photonic inference chip to perform additional feature extraction for the ANN
Example 9 includes the apparatus of Example 1, wherein the optical substrate comprises a SiO2 fiber of a photonic interconnect and is to perform the substantially invariant portion of the ANN
Example 10 includes the apparatus of Example 1, wherein the optical substrate forms a discrete photonic chip to perform inference computations separately from training computations performed on a central processing unit (CPU).
Example 11 includes a method, comprising generating, by a plurality of light sources, an array of input light; receiving, by a photonic pathway, the array of input light, wherein the photonic pathway includes a plurality of programmable heterogeneous heterostructures in an optical substrate to combine and scatter input optical data of the input light to provide output optical data for a substantially invariant portion of the ANN; providing, by the photonic pathway, the output optical data to a variant portion of the ANN, wherein the variant portion is to perform training of the ANN based at least in part on the provided output optical data.
Example 12 includes the method of Example 11, wherein the substantially invariant portion of the ANN model is used as an inference portion of the ANN or as a substantially invariant subset of a training portion of the ANN
Example 13 includes the method of Example 11, wherein the ANN is partitioned into the substantially invariant portion and the variant portion and the substantially invariant portion and the variant portion are included in a plurality of respective substantially invariant portions and a plurality of variant portions of the ANN
Example 14 includes the method of any one of Examples 11-13, wherein the plurality of programmable heterogeneous heterostructures are embedded or etched in the optical substrate to apply fixed weights to the input light and the fixed weights are associated with determining if data forms a feature.
Example 15 includes a system for implementing an artificial neural network (ANN), comprising an optical substrate to include a plurality of programmable heterogeneous heterostructures to perform computations for a substantially invariant portion of the ANN, wherein the ANN is partitioned into the substantially invariant portion and a variant portion and the optical substrate forms at least a subset of the substantially invariant portion; a photonic pathway to include the optical substrate; and a central processing unit (CPU), coupled to the photonic pathway, to receive data generated by the photonic pathway, wherein the CPU is to perform computations for the variant portion of the ANN on the data generated by the photonic pathway.
Example 16 includes the system of Example 15, wherein the substantially invariant portion performs lower-level feature extraction or image recognition tasks and the variant portion includes higher level feature extraction tasks or classifications.
Example 17 includes the system of Example 15, wherein the photonic pathway comprises a photonic inference chip or an optical fiber substrate to form pathways between variant layers of the ANN and wherein the CPU includes one or more of the variant layers.
Example 18 includes the system of Example 15, wherein the plurality of programmable heterogeneous heterostructures are embedded or etched in the optical substrate to apply fixed weights to a light input to the optical substrate.
Example 19 includes the system of Example 15, wherein the substantially invariant portion of the ANN model is used as an inference portion of the ANN or as a substantially invariant subset of a training portion of the ANN
Example 20 includes the system of any one of Examples 15-19, wherein the plurality of programmable heterogeneous heterostructures are programmed at least in part by their shape and arrangement in the optical substrate to combine and scatter input light to perform computations for the substantially invariant portion of the ANN
Example 20 includes the means for performing the method of any one of Examples 11-14.

Various embodiments may include any suitable combination of the above-described embodiments including alternative (or) embodiments of embodiments that are described in conjunctive form (and) above (e.g., the "and" may be "and/or"). Furthermore, some embodiments may include one or more articles of manufacture (e.g., non-transitory computer-readable media) having instructions, stored thereon, that when executed result in actions of any of the above-described embodiments. Moreover, some embodiments may include apparatuses or systems having any suitable means for carrying out the various operations of the above-described embodiments.

The above description of illustrated implementations, including what is described in the Abstract, is not intended to be exhaustive or to limit the embodiments of the present disclosure to the precise forms disclosed. While specific implementations and examples are described herein for illustrative purposes, various equivalent modifications are possible within the scope of the present disclosure, as those skilled in the relevant art will recognize.

These modifications may be made to embodiments of the present disclosure in light of the above detailed description. The terms used in the following claims should not be construed to limit various embodiments of the present disclosure to the specific implementations disclosed in the specification and the claims. Rather, the scope is to be determined entirely by the following claims, which are to be construed in accordance with established doctrines of claim interpretation.

## Claims

1. An apparatus, comprising:
a substantially invariant portion of an artificial neural network (ANN), wherein the substantially invariant portion includes a plurality of programmable heterogeneous heterostructures disposed in an optical substrate, wherein the programmable heterogeneous heterostructures are programmed at least in part by their arrangement in the optical substrate to combine and scatter input optical data to provide output optical data for the substantially invariant portion of the ANN; and
a photonic pathway to include the substantially invariant portion, wherein the photonic pathway is coupleable to provide the output optical data to a variant portion of the ANN, wherein the variant portion is to perform training of the ANN based at least in part on the provided output optical data.

2. The apparatus of claim 1, wherein the substantially invariant portion of the ANN model is used as an inference portion of the ANN or as a substantially invariant subset of a training portion of the ANN

3. The apparatus of claim 1, wherein the plurality of programmable heterogeneous heterostructures are embedded or etched in the optical substrate to apply fixed weights to input light and the fixed weights are associated with determining if the input optical data forms a feature; and
optionally, wherein the substantially invariant portion is included in a plurality of substantially invariant portions of the ANN, and the variant portion is included in a plurality of variant portions of the ANN

4. The apparatus of claim 1, wherein the plurality of programmable heterogeneous heterostructures are programmed at least in part by their shape and arrangement in the optical substrate to combine and scatter input light to perform computations for the substantially invariant portion of the ANN; or
optionally, wherein the plurality of programmable heterogeneous heterostructures are embedded or etched in the optical substrate to apply fixed weights to a light input to the optical substrate.

5. The apparatus of any of claims 1-4, wherein the photonic pathway comprises a first photonic inference chip to perform a first invariant portion of the ANN, and the first photonic inference chip is combinable with a second photonic inference chip to perform a second invariant portion of the ANN

6. The apparatus of any of claims 1-4, wherein the photonic pathway comprises a first photonic inference chip to perform feature extraction for the ANN, and the first photonic inference chip is combinable with a second photonic inference chip to perform additional feature extraction for the ANN

7. The apparatus of any of claims 1-4, wherein the optical substrate comprises a SiO2 fiber of a photonic interconnect and is to perform the substantially invariant portion of the ANN; or
optionally, wherein the optical substrate forms a discrete photonic chip to perform inference computations separately from training computations performed on a central processing unit (CPU).

8. A method, comprising:
generating, by a plurality of light sources, an array of input light;
receiving, by a photonic pathway, the array of input light, wherein the photonic pathway includes a plurality of programmable heterogeneous heterostructures in an optical substrate to combine and scatter input optical data of the input light to provide output optical data for a substantially invariant portion of the ANN;
providing, by the photonic pathway, the output optical data to a variant portion of the ANN, wherein the variant portion is to perform training of the ANN based at least in part on the provided output optical data.

9. The method of claim 8, wherein the substantially invariant portion of the ANN model is used as an inference portion of the ANN or as a substantially invariant subset of a training portion of the ANN

10. The method of claims 8 or 9, wherein the substantially invariant portion and the variant portion are included in a plurality of respective substantially invariant portions and a plurality of variant portions of the ANN; or
optionally, wherein the plurality of programmable heterogeneous heterostructures are embedded or etched in the optical substrate to apply fixed weights to the input light and the fixed weights are associated with determining if data forms a feature.

11. A system for implementing an artificial neural network (ANN), comprising:
an optical substrate to include a plurality of programmable heterogeneous heterostructures to perform computations for a substantially invariant portion of the ANN, wherein the ANN is partitioned into the substantially invariant portion and a variant portion and the optical substrate forms at least a subset of the substantially invariant portion;
a photonic pathway to include the optical substrate; and
a central processing unit (CPU), coupled to the photonic pathway, to receive data generated by the photonic pathway, wherein the CPU is to perform computations for the variant portion of the ANN on the data generated by the photonic pathway.

12. The system of claim 11, wherein the substantially invariant portion performs lower-level feature extraction or image recognition tasks and the variant portion includes higher level feature extraction tasks or classifications.

13. The system of claims 11 or 12, wherein the photonic pathway comprises a photonic inference chip or an optical fiber substrate to form pathways between variant layers of the ANN and wherein the CPU includes one or more of the variant layers.

14. The system of claims 11 or 12, wherein the plurality of programmable heterogeneous heterostructures are embedded or etched in the optical substrate to apply fixed weights to a light input to the optical substrate.

15. The system of claims 11 or 12, wherein the substantially invariant portion of the ANN model is used as an inference portion of the ANN or as a substantially invariant subset of a training portion of the ANN; or
optionally, wherein the plurality of programmable heterogeneous heterostructures are programmed at least in part by their shape and arrangement in the optical substrate to combine and scatter input light to perform computations for the substantially invariant portion of the ANN
